(19) Europäisches Patentamt
European Patent Office
Office européen des brevets

(11) Veröffentlichungsnummer: **0 177 825**
**A1**

(12) # EUROPÄISCHE PATENTANMELDUNG

(21) Anmeldenummer: **85112039.4**

(22) Anmeldetag: **23.09.85**

(51) Int. Cl.[4]: **C 10 M 155/02**, C 10 M 111/04 // (C10M111/04, 107:50)

(30) Priorität: **03.10.84 DE 3436164**

(43) Veröffentlichungstag der Anmeldung: **16.04.86 Patentblatt 86/16**

(84) Benannte Vertragsstaaten: **BE DE FR GB IT**

(71) Anmelder: **BAYER AG, Konzernverwaltung RP Patentabteilung, D-5090 Leverkusen 1 Bayerwerk (DE)**

(72) Erfinder: **Alberts, Heinrich, Dr., Schulstrasse 1a, D-5068 Odenthal-Blecher (DE)**
Erfinder: **Kussi, Siegfried, Brandenburger Strasse 43, D-5090 Leverkussen (DE)**
Erfinder: **Grape, Wolfgang, Dr., Roggendorfstrasse 61, D-5000 Koeln 80 (DE)**
Erfinder: **Schlak, Ottfried, Dr., Carl-Duisberg-Strasse 331, D-5090 Leverkussen (DE)**

(54) **Schmierölzubereitungen.**

(57) Die vorliegende Erfindung betrifft mit Mineralölen mischbare Organopolysiloxane, die einen pourpoint (gemäß DIN 51 583) unterhalb −15°C aufweisen.

EP 0 177 825 A1

BAYER AKTIENGESELLSCHAFT 5090 Leverkusen, Bayerwerk
Konzernverwaltung RP
Patentabteilung Br/bo/c

Schmierölzubereitungen

Die vorliegende Erfindung betrifft Grundöle für Schmierölzubereitungen auf Basis organomodifizierter Polysiloxane, in denen die bei Schmierstoffen auf Mineralölbasis üblichen Additive zur Verbesserung der Schmierfilmbelastbarkeit, des Alterungsverhaltens und zur Verringerung der Korrosion löslich sind. Gegenstand der vorliegenden Erfindung sind weiterhin Mischungen dieser Organopolysiloxane mit mineralischen oder synthetischen Schmierölen und die Verwendung derartiger Gemische in Anwendungsfällen, bei denen das Viskositäts-Temperaturverhalten und die thermisch/oxidative Stabilität reiner Mineralöle unzureichend sind.

Die technisch bekannten Organopolysiloxane der allgemeinen Formel

1) 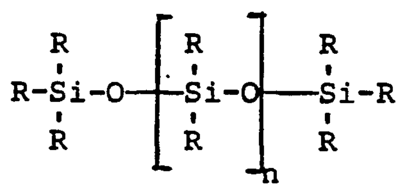

mit R = $CH_3$, Phenyl, Trifluorpropyl
und n = 10 - 5000 oder höher,

sind aufgrund ihrer schlechten Schmierfilmtragfähigkeit, wie sie Ausdruck findet im Verhalten dieser Siliconöle in der Almen-Wieland-Prüfmaschine (M. Brunner u. R. Pedrini, Schweizer Archiv, Annales Suisses, 21 (1955), Nr. 6, S. 169 - 177; 21 (1955), Nr. 8, S. 251 - 257) oder im Reichert-Reibverschleiß-Test (E. Kadmer und H. Danninger, Schmierungstechnik, 7 (1960) Nr. 5, S. 223 - 228), als Schmieröle nur in beschränktem Umfang brauchbar.

Von Vorteil gegenüber mineralischen Schmierstoffen ist dagegen die geringe Viskositätsänderung in Abhängigkeit von der Temperatur, die hohe Oxidations- und Temperaturstabilität.

Durch Zugabe von Additiven wie z.B. Zinkdialkyldithiophosphaten, geschwefelten pflanzlichen Fettsäureestern u.a. läßt sich im allgemeinen das Reibungsverhalten von Schmierölen im Almen-Wieland- bzw. Reicherttest verbessern, doch sind die handelsüblichen Additive zwar in Mineralölen löslich, nicht jedoch in Polysiloxanen der Formel 1. Es kommt daher zu Trübungen und Unverträglichkeiten.

Weiterhin sind reine Polydimethylsiloxane mit Paraffinölen oder anderen mineralischen oder synthetischen Ölen nicht mischbar.

In der US-PS 4 059 534 werden Kohlenwasserstoff/Siliconöl-Gemische als Schmiermittelsysteme mit bevorzugter Anwendung im Tieftemperaturbereich beschrieben. Die verwendeten Kohlenwasserstoffe überschreiten eine bestimmte Viskosität (40 000 $mm^2/s$ bei -65°F) nicht und weisen bestimmte Verzweigungsmerkmale auf. Höherviskose Kohlenwasserstoffe sind mit den in US-PS 4 059 534 in Frage kommenden Siliconölen nicht mischbar. Die beanspruchten Mischungen sind noch zusätzlich auszurüsten mit Antiverschleißadditiven, die üblicherweise in Siliconölen nicht löslich sind.

Ferner wird in der US-PS 3 816 313 die Verwendung von Alkoxysiloxanen beschrieben, die aufgrund ihrer langkettigen Alkylreste in der Alkoxygruppe mineralöllöslich sind. Die beanspruchten Gemische aus Alkoxysiloxan und Schmieröl weisen verbesserte Verschleißfestigkeiten auf ("mean fatigue life"). Bei den in dieser US-PS beschriebenen Siloxanen sind die langkettigen Alkylreste durch SiOC-Bindungen an die Siloxankette gebunden. Dies ist aufgrund der Hydrolyseempfindlichkeit derartiger Systeme weniger bevorzugt als SiC-gebundene Alkylreste.

In der FR-PS 1 425 564 wird ein Verfahren zur Herstellung langkettig alkylsubstituierter Organopolysiloxane durch platinkatalysierte Addition von Olefinen an ein SiH-Gruppen enthaltendes Organopolysiloxan beschrieben. Die Reaktionsprodukte sind mineralöllöslich und wirken, insbesondere, wenn sie noch freie SiH-Gruppen enthalten, als Korrosionsschutzmittel für das Gemisch aus Alkylpolysiloxan und Mineralöl.

Die in der französischen Patentschrift 1 425 564 beschriebenen Organopolysiloxane entsprechen der allgemeinen Formel

2) 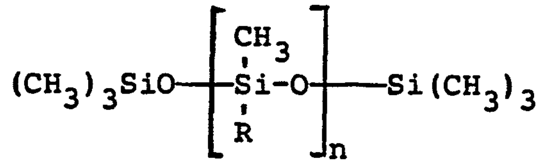

mit R = langkettigem Alkylrest,

d.h. sie enthalten einen langkettigen Alkylrest an jedem Si-Atom in der Kette. Diese Produkte sind zwar mit Mineralölen mischbar, haben jedoch den Nachteil, daß sie einen relativ hohen Stockpunkt (im folgenden "Pourpoint" gemäß DIN 51 583 genannt), und zwar im Bereich um 0°C, besitzen. Damit sind diese Verbindungen zwar im Gemisch mit Mineralölen einsetzbar, ihre allgemeine Verwendung als Schmieröl wird dadurch jedoch erheblich eingegrenzt.

Aufgabe der vorliegenden Erfindung war es daher, organomodifizierte Polysiloxane bereitzustellen, die einerseits für sich allein als Schmieröle einsetzbar sein sollten, andererseits aber auch mit Mineralölen unterschiedlichster Provenienz mischbar sein sollten. Die Löslichkeit handelsüblicher Schmieröladditive in diesen Siliconölen sollte ebenfalls gegeben sein. Voraussetzung dafür war zum einen ein ausreichender Siliconcharakter, der bewirkte, daß ein Stockpunkt von weniger als -15°C erreicht wurde, der als notwendig erachtet wird für eine Anwendung des Siliconöls als Grundöl für Schmierstoff-Formulierungen, zum anderen ein gewisser Alkylcharakter, der bewirkte, daß sowohl Mineralöle unterschiedlichster Provenienz als auch im Schmierölbereich übliche Additive mit dem Siliconöl mischbar wurden.

Gegenstand der vorliegenden Erfindung sind somit mit Mineralölen mischbare Organopolysiloxane der allgemeinen Formel

3) 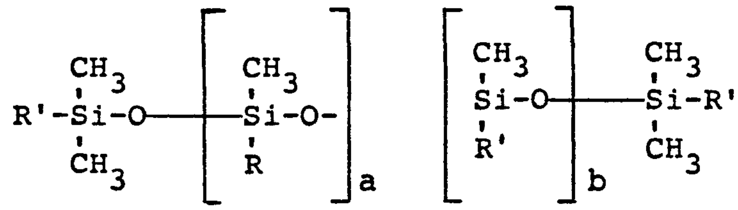

wobei

R für einen geradkettigen Alkylrest mit 6 bis 18 C-Atomen oder einen verzweigten Alkylrest mit 6 bis 16 C-Atomen steht,

R' geradkettige oder verzweigte Alkylreste mit 1 bis 7 C-Atomen oder den Phenylrest bedeutet und

a und b ganze Zahlen von 1 bis 500 bedeuten, wobei das Verhältnis b:a größer als 2 ist;

mit einem Pourpoint (gemäß DIN 51 583) unterhalb -15°C.

Erfindungsgemäß werden für derartige Schmierölsysteme polymere Produkte auf Organopolysiloxangrundlage verwendet, die im wesentlichen aus Einheiten der folgenden allgemeinen Formeln bestehen:

a) Einheiten der allgemeinen Formel

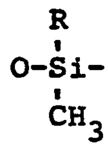

worin

R geradkettige Alkylreste mit 6 bis 18 C-Atomen, vorzugsweise 10 bis 14 C-Atomen, oder verzweigte Alkylreste mit 6 bis 16 C-Atomen, bevorzugt 6 bis 10 C-Atomen, bedeutet,

sowie

b) Einheiten der allgemeinen Formel

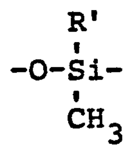

worin

R' geradkettige oder verzweigte Alkylreste mit 1 bis 7 C-Atomen oder den Phenylrest bedeutet,

sowie

c) Einheiten der allgemeinen Formel

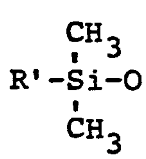

oder

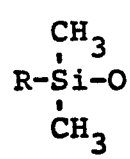

worin

R und R' die obengenannte Bedeutung haben.

Das Verhältnis der Einheiten b zu den Einheiten a ist in jedem Fall gleich zwei oder größer als zwei. Bevorzugt ist ein Verhältnis b/a zwischen 2 und 10. Bevorzugt sind solche Verbindungen, die 1 bis 225 Einheiten a und 9 bis 450 Einheiten b enthalten. Die Gesamtkettenlänge, die bestimmt wird durch den Gehalt an c, beträgt zwischen 10 und 700 Siliconeinheiten.

Beispiele für geradkettige Reste R sind Hexyl-, Octyl-, Nonyl-, Decyl-, Dodecyl- und Tetradecylreste. R kann jedoch auch ein verzweigter Alkylrest sein. Beispiele für verzweigte Alkylreste sind 3-Methylpentyl-, 2,3-Dimethylbutyl-, 3-Butylhexyl- und 4-Propyloctylreste. Besonders bevorzugte Alkylreste R sind der Dodecyl- und der Tetradecylrest, insbesondere auch Gemische aus beiden. Beispiele für geradkettige Alkylreste R' sind Methyl-, Ethyl-, Propyl-, Hexyl- und Heptylreste. Beispiele für verzweigte Alkylreste R' sind Isobutyl-, 2-Methylbutyl- und 2,2-Dimethylpropylreste. R' kann weiterhin den Phenylrest bedeuten. Bevorzugt ist jedoch R' = Methyl.

Die erfindungsgemäßen Organopolysiloxane weisen im Vergleich zu den klassischen Organopolysiloxanen der Formel 1 eine drastisch verbesserte Schmierfilmtragfähigkeit auf. Überraschenderweise wurde gefunden, daß auch

ihre Gemische mit mineralischen oder synthetischen Schmierölen verbesserte Schmierfilmtragfähigkeit aufweisen und handelsübliche schmierfilmverbessernde Additive wie z.B. 2-Ethylhexylzinkdithiophosphat oder geschwefelte pflanzliche Fettsäureester in ausreichender Menge klar lösen.

Desweiteren sind Gegenstand der Erfindung Gemische von

1) 0,1 bis 75 Gew.-%, vorzugsweise 1 bis 30 Gew.-%, der erfindungsgemäßen Organopolysiloxankomponente,

2) 99,9 bis 25 Gew.-%, vorzugsweise 99 bis 70 Gew.-% eines mineralischen oder synthetischen Schmieröls.

Die erfindungsgemäß verwendeten Organopolysiloxane oder ihre Gemische mit mineralischen oder synthetischen Schmierölen können Additive wie Farbstoffe, pour point depressants, antiwearagents, Korrosionsschutzmittel, Antioxidantien und Dispergierhilfsmittel oder Detergentien enthalten.

Die Herstellung der erfindungsgemäßen Organopolysiloxane kann beispielsweise wie folgt durchgeführt werden:

1. a) Pt-katalysierte Addition von $\alpha$-Olefinen an $CH_3SiHCl_2$,

   b) Äquilibrierung unter katalytischer Wirkung einer Säure ($C_4F_9SO_3H$, $H_2SO_4$) mit $(CH_3)_2SiO$- und $(CH_3)_3SiO_{1/2}$-Einheiten

2. a) Herstellung eines Öls der allgemeinen Formel

4) 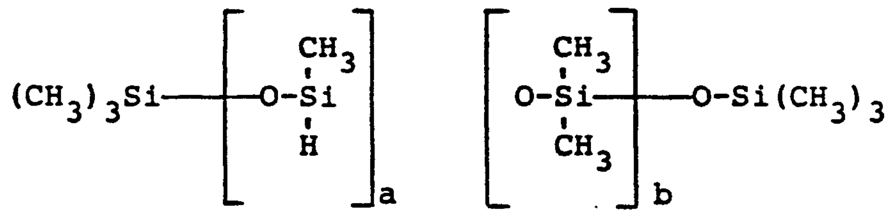

b) Pt-katalysierte Addition von α-Olefinen an das SiH-haltige Öl.

Für die Additionsreaktion kommen α-Olefine mit 6 bis 18 C-Atomen in Frage, bevorzugt solche mit 10 - 14 C-Atomen. Die entsprechenden α-Olefine sind linear oder verzweigtkettig. Derartige Reaktionen sind an sich bekannt und werden z.B. in W. Noll, Chemie and Technologie der Silicone, 2. Auflage, 1968, S. 48 beschrieben.

Die folgenden Beispiele 1 - 10 belegen die gute Mischbarkeit der erfindungsgemäßen Organopolysiloxane mit Mineralölen wie z.B. rein paraffinischen Ölen sowie gemischt basischen Mineralölen (Paraffine/Naphthene) und rein naphthenischen Ölen. Darüber hinaus sind die neuen Organopolysiloxane auch in synthetischen Basisfluiden für Schmierstoffe wie z.B. Dicarbonsäureestern und Neopolyolestern gut löslich (s. Tab. 1).

Weiterhin wurde gefunden, daß sowohl die organomodifizierten Polysiloxane selbst (beim Vergleich mit derzeit technisch bekannten Organopolysiloxanen) als auch Gemische der neuen Produkte mit Mineralölen (beim

Vergleich mit reinen Mineralölen) zu stark verbessertem Reibungsverhalten - höhere Schmieröltragfähigkeit, besserer Verschleißschutz - führen (Tab. 2).

Die erfindungsgemäßen Organopolysiloxane sind auch in synthetischen Basisflüssigkeiten, die zur Formulierung voll- und teilsynthetischer Schmierstoffe eingesetzt werden wie z.B. 2-Ethylhexyladipinat, Trimethylolpropantri-pelargonat oder Pentaerythrit-tetra-pelargonat sehr gut löslich.

Weiterhin wurde gefunden, daß eine Reihe für Mineralöle handelsübliche Schmierstoffadditive z.B. antiwear/Extreme pessure-Additive, Korrosionsinhibitoren, Antioxidantien u.a. in ausreichender Dosierungsmenge in den neuen Organopolysiloxanen gut löslich sind, wobei sich durch Zusatz solcher Additivkombinationen das Reibungs- und Verschleißverhalten, die thermisch-oxidative Stabilität und der Korrosionsschutz organopolysiloxanhaltiger Formulierungen auf das Niveau hochlegierter mineralischer Getriebeöle anheben läßt (Tab. 3).

Beim Mischen der neuen Organopolysiloxane mit Mineralölen wurde festgestellt, daß nicht nur das Reibungsverhalten, sondern auch das Viskositäts-Temperatur-Verhalten der mineralischen Grundöle gravierend verbessert wird (Tab. 4).

Anhand der folgenden Tabellen sollen die Eigenschaften der erfindungsgemäßen Polysiloxane bzw. deren Gemische mit Mineralölen noch näher erläutert werden.

Zusammensetzungen der in den Tabellen aufgeführten erfindungsgemäßen Siliconöle

| Produkt Nr. | durchschnittliche Zusammensetzung | Stockpunkte der Beispielsöle (pour points) | R |
|---|---|---|---|
| 1 | $M_2D_{20}D'_5$ | -36 | $C_{12}H_{25}/C_{14}H_{29}$-Gemisch (ca. 70 % $C_{12}H_{25}$) |
| 2 | $M_2D_{12,5}D'_{5,5}$ | -16 | $C_{12}H_{25}/C_{14}H_{29}$-Gemisch |
| 3 | $M_2D_{12,5}D'_{5,5}$ | -60 | $C_8H_{17}$ |
| 4 | $M_2D_{12,5}D'_{5,5}$ | -56 | $C_{10}H_{21}$ |
| 5 | $M_2D_{20}D'_5$ | -40 | $C_{14}H_{29}$ |
| 6 | $M_2D_{200}D'_{50}$ | -20 | $C_{12}H_{25}/C_{14}H_{29}$-Gemisch |
| 7 | $M_2D_{120}D'_{60}$ | -18 | $C_{12}H_{25}/C_{14}H_{29}$-Gemisch |
| 8 | $M_2D_{160}D'_{80}$ | -15 | $C_{12}H_{25}/C_{14}H_{29}$-Gemisch |
| 9 | $M_2D_{10}D'_{2,5}$ | -15 | $C_{12}H_{25}/C_{14}H_{29}$-Gemisch |
| 10 | $M_2D_{120}D'_{30}$ | -18 | $C_{12}H_{25}/C_{14}H_{29}$-Gemisch |

mit M = 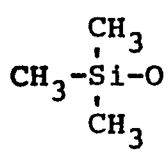 , D = 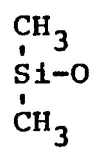 , D' = 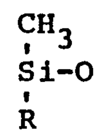

Die Herstellung der Polysiloxane wurde wie folgt durchgeführt (illustriert anhand der Produkte Nr. 2 und 9).

Produkt 2: Herstellung eines modifizierten Siliconöls vom Typ

$$[Me_3SiO]-[Me\ R\ SiO]_5-[Me_2SiO]_{20}-SiMe_3$$

$$Me = CH_3$$

Eine Mischung aus 43,26 Teilen Octanethylcyclotetrasiloxan, 3,94 Teilen Hexamethyldisiloxan und 9,56 Teilen eines SiH-haltiges Siliconöls der Zusammensetzung

$$(CH_3)_3\ Si\left(O-\underset{H}{\overset{CH_3}{Si}}-\right)_{30}OSi(CH_3)_3$$

wird im Reaktionsgefäß vorgelegt und mit 0,12 Teilen einer Mischung aus Perfluorbutansulfonsäure und Schwefelsäure (Gewichtsverhältnis 1:1) versehen. Es wird 20 Stunden bei Raumtemperatur gerührt.

Durch Zugabe von 0,6 Teilen Zinkoxid wird neutralisiert. Anschließend wird das Öl filtriert und durch Ausheizen bis 150° Sumpftemperatur bei 0,5 mbar Druck von den Leichtsiedern befreit.

50 Teile des so erhaltenen Öls werden mit einer Mischung aus 0,15 Teilen eines Pt-Katalysators mit 1 % Pt und 0,225 Teilen eines $\alpha$-Olefingemisches aus $C_{12}H_{24}$ und $C_{14}H_{28}$ (Verhältnis 2:1) versetzt. Anschließend wird

auf 120° erhitzt; bei dieser Temperatur werden 36,3 Teile des Olefingemisches innerhalb von 3 Stunden zugetropft. Nach Zugabe von drei Vierteln der Olefinmenge wird durch Zusatz von 0,075 Teilen Pt-Katalysator und 0,12 Teilen Olefingemisch nachkatalysiert. Nach beendeter Zugabe wird 3 Stunden nachgerührt. Anschließend heizt man bis 150° Sumpftemperatur bei 1 mbar Druck aus.

Man erhält 75 Teile eines Siliconöls mit folgenden Kenndaten:
Viskosität: 98,9 $mm^2/s$ bei 20°C
Dichte: 0,926 g/ml bei 20°C
Flammpunkt: 146° nach DIN 51758

Das $^1H$-NMR-Spektrum zeigt ein Intensitätsverhältnis von Si-Methyl/Si-Alkyl-Gruppen von 1:1.

Produkt 9: Herstellung eines modifizierten Siliconöls vom Typ

$$[Me_3SiO]-[Me\ R\ SiO]_{2,5}\ [Me_2SiO]_{10}\ [SiMe_3]$$

In einen Dreihalskolben mit Rührer, Thermometer, Tropftrichter, Rückflußkühler bzw. Destillationsaufsatz werden 14 Teile eines Methyl-Alkyldichlorsilansgemisches gegeben, das durch Platin-katalysierte Addition von $MeHSiCl_2$ an ein Gemisch von α-Olefin mit 63 Gew.-% C-12-Olefin und 37 Gew.-% C-14-Olefin erhalten worden war.

Dazu werden 14 Teile Octamethylcyclotetrasiloxan, 0,013 Teile $C_4F_9SO_3H$ und 0,030 Teile konzentrierte

Schwefelsäure gegeben. Anschließend wird auf 60°C erwärmt und während 4 Stunden ein Gemisch aus 0,75 Teilen Wasser und 1,10 Teilen Eisessig zugefügt und das entstehende HCl-Gas abgeleitet. Danach gibt man 3 Teile Hexamethyldisiloxan zu, erwärmt auf 90°C, rührt 4 Stunden bei dieser Temperatur, fügt weitere 0,165 Teile Wasser zu, destilliert bis 120°C Sumpftemperatur, gibt 0,38 Teile Natriumacetat zu, reduziert den Druck, destilliert bis 130°C Sumpftemperatur bei 20-30 mbar, wechselt die Destillationsvorlage; fügt 0,38 Teile Bicarbonat zu und heizt bis 160°C bei 1 mbar Druck aus. Nach Abkühlung und Filtration werden 23 Teile Siliconöl mit den folgenden Kenndaten erhalten:

Viskosität: 30 mPas bei 23°C;
Feststoffgehalt: 99 % (nach DIN 53182);
Dichte: 0,920 g/ml bei 23°C;
das Öl ist bräunlich gelb, neutral und besitzt einen Flammpunkt von 240°C. Das $^1H$-NMR-Spektrum zeigt ein Intensitätsverhältnis der Si-Methyl/Si-Alkyl-Gruppen von 1,2:1,0.

Tabelle 1 Mischbarkeit mit handelsüblichen mineralischen Grundölen

| Bsp. Nr. | Gew.% Poly-siloxan | Gew.% Grund-öl | a) paraffinischer Grundöltyp, löslich im Tmp.-Bereich von °C | bis °C | b) gemischtbasischer Grundöltyp, löslich im Tmp.-Bereich von °C | bis °C | c) naphthenischer Grundöltyp, löslich im Tmp.-Bereich von °C | bis °C |
|---|---|---|---|---|---|---|---|---|
| 1 | 25 | 75 | -10 | >200 | - 9 | >200 | <-60 | >200 |
| | 50 | 50 | -11 | >200 | -11 | >200 | -57 | >200 |
| | 75 | 25 | -13 | >200 | >+25 | >200 | -50 | >200 |
| 2 | 25 | 75 | -15 | >200 | -10 | >200 | -30 | >200 |
| | 50 | 50 | -16 | >200 | -11 | >200 | -24 | >200 |
| | 75 | 25 | -26 | >200 | -21 | >200 | -22 | >200 |
| 3 | 25 | 75 | -11 | >200 | + 1 | >200 | <-60 | >200 |
| | 50 | 50 | -10 | >200 | >+25 | >200 | <-60 | >200 |
| | 75 | 25 | -12 | >200 | >+25 | >200 | <-60 | >200 |
| 4 | 25 | 75 | -10 | >200 | - 8 | >200 | <-60 | >200 |
| | 50 | 50 | -11 | >200 | - 9 | >200 | <-60 | >200 |
| | 75 | 25 | -13 | >200 | >+25 | >200 | <-60 | >200 |
| 5 | 25 | 75 | -10 | >200 | - 7 | >200 | <-60 | >200 |
| | 50 | 50 | - 9 | >200 | - 8 | >200 | <-60 | >200 |
| | 75 | 25 | -11 | >200 | >+25 | >200 | <-60 | >200 |
| 6 | 25 | 75 | -11 | >200 | + 1 | >200 | -38 | >200 |
| | 50 | 50 | -20 | >200 | >+25 | >200 | -39 | >200 |
| | 75 | 25 | -21 | >200 | >+25 | >200 | -41 | >200 |
| 7 | 25 | 75 | -24 | >200 | -18 | >200 | -34 | >200 |
| | 50 | 50 | -22 | >200 | - 8 | >200 | -30 | >200 |
| | 75 | 25 | -19 | >200 | >+25 | >200 | -18 | >200 |
| 8 | 25 | 75 | -22 | >200 | -17 | >200 | -38 | >200 |
| | 50 | 50 | -23 | >200 | - 9 | >200 | -32 | >200 |
| | 75 | 25 | -25 | >200 | >+25 | >200 | -28 | >200 |

Tabelle 1 (Fortsetzung)

| Bsp. Nr. | Gew.% Poly-siloxan | Gew.% Grund-öl | a) paraffinischer Grund-öltyp, löslich im Tmp.-Bereich von °C | bis °C | b) gemischtbasischer Grundöltyp, löslich im Tmp.-Bereich von °C | bis °C | c) naphthenischer Grund-öltyp, löslich im Tmp.-Bereich von °C | bis °C |
|---|---|---|---|---|---|---|---|---|
| 9 | 25 | 75 | -20 | >200 | -14 | >200 | -48 | >200 |
| | 50 | 50 | -20 | >200 | -12 | >200 | -45 | >200 |
| | 75 | 25 | -22 | >200 | >+25 | >200 | -28 | >200 |
| 10 | 25 | 75 | -12 | >200 | - 8 | >200 | -45 | >200 |
| | 50 | 50 | -15 | >200 | >+25 | >200 | -31 | >200 |
| | 75 | 25 | -21 | >200 | >+25 | >200 | -28 | >200 |

Tabelle 2 Reibungsverhalten im Gemisch mit einem gemischtbasischen mineralischen Grundöl

Die Testgemische sind im Reichert-Reibverschleiß-Test (E. Kadmer u. H. Danninger, Schmierungstechnik Jg. 7 (1960) Nr. 5, S. 223-228) und auf der Almen-Wieland-Maschine (H. Brunner u. R. Pedrini, Schweizer Archiv Annales Suisses, Jg. 21 (1955) Nr. 6, S. 169-177; Jg. 21 (1955) Nr. 8, S. 251-257) geprüft worden, wobei für die Beispiele 2,6,7 und 8 folgende Meßwerte ermittelt wurden.

| Bsp. Nr. | Gew.-% Produkt in gemischt basischem Grundöl | Reichert-Reibverschleiß-Test bei 15 N Belastung | Almen-Wieland-Test | | |
|---|---|---|---|---|---|
| | | spez. Filmbelastbarkeit $N/mm^2$ | Anpreßkraft N | Reibungskraft N | Temperatur °C |
| - | 0 | 19,2 | 2500 | 550 | 26 |
| 2 | 5 | 13,6 | 4000 | 1900 | 45 |
| | 10 | 15,9 | 4000 | 2500 | 39 |
| | 20 | 19,2 | 4000 | 2300 | 36 |
| 6 | 5 | 16,9 | 4000 | 2000 | 40 |
| | 10 | 18,0 | 4000 | 1900 | 34 |
| | 20 | 21,5 | 10000 | 1434 | 57 |
| 7 | 5 | 16,6 | 3500 | 2050 | 33 |
| | 10 | 20,7 | 4500 | 1900 | 38 |
| | 20 | 25,1 | 6000 | 1100 | 39 |
| 8 | 5 | 15,5 | 3500 | 1900 | 33 |
| | 10 | 17,0 | 4000 | 2150 | 38 |
| | 20 | 21,3 | 6500 | 3500 | 45 |

**Tabelle 3** Löslichkeit von extreme pressure (EP)- und antiwear (AW)-Additiven in den erfindungsgemäßen organomodifizierten Polysiloxanen

Aus der Vielzahl handelsüblicher EP/AW-Additive wurden für die Löslichkeitsversuche ein Zinkdialkyldithiophosphat (Additin RC 1529 der Rheinchemie Rheinau GmbH) und ein org. Schwefelträger (40 % S, Additin M 1949 der RCR) ausgewählt. Die Prüfung in den erfindungsgemäßen Polysiloxanen erfolgte durch Einlösen der Additive in den anwendungsrelevanten Konzentrationen 1, 2, 3, 4 und 5 Gew.-%, wobei sich nach Abkühlung auf 20°C zeigte, daß die o. a. Additive in den Polysiloxanen auch langfristig klar gelöst bleiben.

Die folgenden Versuchsergebnisse aus dem Reichert-Reibverschleiß- und Almen-Wieland-Test belegen die ausgezeichnete Wirksamkeit dieser Additive auf das Reibungsverhalten der erfindungsgemäßen organomodifizierten Polysiloxane.

| Organopolysiloxan<br>Additiv | 98 % gemäß Bsp. 2<br>2 % RC 1949 (40% S) | 98 % gemäß Bsp. 2<br>2 % RC 1529 | 100 % Beispiel 2<br>- |
|---|---|---|---|
| **Reichert-Reibverschleiß**<br>(bei 15 N Belastung) | | | |
| Verschleißmarke mm² | 5,4 | 11,0 | 26,5 |
| Spez. Belastbarkeit N/mm² | 55,6 | 27,1 | 11,5 |
| **Almen-Wieland-Test**<br>(Werte an der Freßgrenze) | | | |
| Schweißkraft N | 15000 | 8000 | 4000 |
| Reibungskraft N | 3100 | 1450 | 1800 |
| Temperatur °C | 123 | 58 | 56 |

Tabelle 4 Einfluß der erfindungsgemäßen organomodifizierten Polysiloxane auf das Viskositäts-Temperatur-Verhalten eines gemischtbasischen mineralischen Grundöles

| Bsp. Nr. | Gew.-% Polysiloxan | Gew.-% Grundöl | Viskosität in $mm^2/g$ bei 20°C | 40°C | 50°C | 100°C | Viskositätsindex VJ* |
|---|---|---|---|---|---|---|---|
| | | 100 | 343 | 100 | 61 | 10,8 | 90 |
| 2 | 5 | 95 | 332 | 98 | 61 | 11,5 | 105 |
| | 10 | 90 | 312 | 97 | 60 | 12,0 | 115 |
| | 20 | 80 | 97 | 93,5 | 60 | 12,9 | 135 |
| 6 | 5 | 95 | 377 | 112 | 70 | 13,8 | 122 |
| | 10 | 90 | 404 | 127 | 81 | 16,5 | 140 |
| | 20 | 80 | 475 | 164 | 107 | 24,6 | 182 |
| 7 | 5 | 95 | 371 | 111 | 68,3 | 13,3 | 116 |
| | 10 | 90 | 398 | 125 | 78,4 | 15,7 | 132 |
| | 20 | 80 | 442 | 149 | 96 | 20,8 | 163 |
| 8 | 5 | 95 | 395 | 118 | 73 | 14,1 | 119 |
| | 10 | 90 | 433 | 134 | 84 | 17,0 | 138 |
| | 20 | 80 | 525 | 175 | 113 | 27,7 | 197 |

* Der Viskositätsindex drückt die Beständigkeit flüssiger Schmierstoffe gegenüber Temperaturänderungen aus. Der VJ wird von Dean und Davis in "Ind. and Eng. Chem." Band 32, Seite 104 (1940) beschrieben und nach der Norm ISO 2909 bestimmt.

Patentansprüche

1) Mit Mineralölen mischbare Organopolysiloxane der allgemeinen Formel

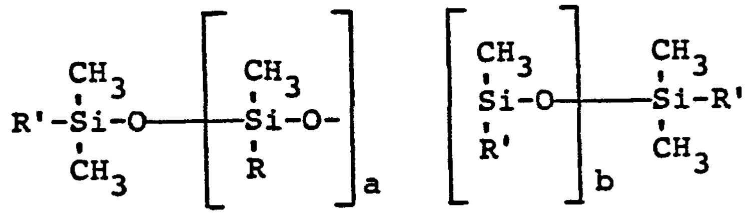

wobei

R für einen geradkettigen Alkylrest mit 6 bis 18 C-Atomen oder einen verzweigten Alkylrest mit 6 bis 16 C-Atomen steht,

R' geradkettige oder verzweigte Alkylreste mit 1 bis 7 C-Atomen oder den Phenylrest bedeutet und

a und b ganze Zahlen von 1 bis 500 bedeuten, wobei das Verhältnis b:a größer als 2 ist;

mit einem pourpoint (gemäß DIN 51 583) unterhalb -15°C.

2) Gemische bestehend aus Organopolysiloxanen gemäß Anspruch 1 und synthetischen und/oder mineralischen Schmierölen.

3) Gemische gemäß Anspruch 2, dadurch gekennzeichnet, daß sie aus 0,1 - 75 Gew.-% Organopolysiloxanen gemäß Anspruch 1 und aus 25 - 99,9 Gew.-% synthetischem und/oder mineralischem Schmieröl bestehen.

4) Verwendung von Organopolyoxanen gemäß Anspruch 1 als Schmiermittel.

5) Verwendung von Gemischen gemäß Ansprüchen 2 oder 3 als Schmiermittel.

Europäisches Patentamt

**EUROPÄISCHER RECHERCHENBERICHT**

0177825
Nummer der Anmeldung

EP 85 11 2039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X,Y | FR-A-1 452 303 (DOW CORNING) * Ansprüche 1,2; Seite 2, Spalte 1, Absätze 1-5 * --- | 1-5 | C 10 M 155/02<br>C 10 M 111/04 //<br>(C 10 M 111/04<br>C 10 M 107:50 ) |
| Y | DE-B-1 276 269 (DOW CORNING) * Anspruch * --- | 1 | |
| Y | FR-A-1 461 931 (G.E.) * Ansprüche 4,5 * --- | 1 | |
| A | DE-A-1 806 445 (ICI) * Ansprüche 1,11 * ----- | 1-5 | |
| | | | **RECHERCHIERTE SACHGEBIETE (Int. Cl.4)** |
| | | | C 10 M<br>C 08 G |

Der vorliegende Recherchenbericht wurde für alle Patentansprüche erstellt.

| Recherchenort | Abschlußdatum der Recherche | Prüfer |
|---|---|---|
| DEN HAAG | 18-12-1985 | ROTSAERT L.D.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument